# EUROPÄISCHE PATENTSCHRIFT

(11) **EP 3 538 748 B1**
(45) Veröffentlichungstag und Bekanntmachung des Hinweises auf die Patenterteilung: **26.08.2020**
(21) Anmeldenummer: 17821504.2
(22) Anmeldetag: 06.12.2017
(51) Int. Cl.: F01N 3/20

(54) **LEITUNGSSTRANG ZUR TEMPERIERTEN FÜHRUNG EINES REDUKTIONSMITTELS FÜR DIE ABGASNACHBEHANDLUNG EINER BRENNKRAFTMASCHINE**
LINE SECTION FOR THE TEMPERATURE-CONTROLLED GUIDING OF A REDUCTANT FOR THE EXHAUST GAS AFTERTREATMENT OF AN INTERNAL COMBUSTION ENGINE
FAISCEAU DE CONDUITES PERMETTANT LE GUIDAGE THERMO-RÉGULÉ D'UN AGENT RÉDUCTEUR POUR LE POST-TRAITEMENT DES GAZ D'ÉCHAPPEMENT D'UN MOTEUR À COMBUSTION INTERNE

(30) Priorität: 19.12.2016 DE 202016107103 U
(43) Veröffentlichungstag der Anmeldung: 18.09.2019
(73) Patentinhaber: Voss Automotive GmbH, 51688 Wipperfürth (DE)
(72) Erfinder: ROSENFELDT, Sascha, 51688 Wipperfürth (DE); HESSELFELD, Sebastian, 51688 Wipperfürth (DE); BOHL, Alexander, 42289 Wuppertal (DE); MITTERER, Reiner, 51688 Wipperfürth (DE); ZIERIS, Volker, 51399 Burscheid (DE)
(74) Vertreter: Patent- und Rechtsanwälte Dr. Solf & Zapf
(86) Internationale Anmeldenummer: PCT/EP2017/081649
(87) Internationale Veröffentlichungsnummer: WO 2018/114330

(56) Entgegenhaltungen:
- DE-A1-102010 055 520
- DE-A1-102014 112 731
- DE-U1-202007 015 036

## Beschreibung

Die Erfindung betrifft einen Leitungsstrang zur temperierten Führung eines Reduktionsmittels für die Abgasnachbehandlung einer Brennkraftmaschine, umfassend eine erste Leitung zum Führen des Reduktionsmittels, eine zweite Leitung zum Führen eines Temperiermittels und eine die beiden Leitungen umgebende Hülle, wobei die beiden Leitungen in der Hülle benachbart zueinander verlaufend angeordnet und in einem Kupplungsgehäuse geführt sind und die Hülle mit dem Kupplungsgehäuse verbunden ist.

Zur Verminderung von Stickoxidemissionen einer Brennkraftmaschine ist es grundsätzlich bekannt, mit Hilfe der selektiven katalytischen Reduktion (**S**elective-**C**atalytic-**R**eduction - abgekürzt: SCR) die bei der Verbrennung entstehenden Stickoxide in Luftstickstoff und Wasserdampf umzuwandeln. Dabei wird in der Regel als Reduktionsmittel eine unter dem Namen Adblue® bekannte wässrige Harnstofflösung verwendet, die in einer Reduktionsmittel-Tankeinheit gespeichert wird. Mit dieser Lösung, die einen Gefrierpunkt von - 11,5 °C hat, kann der Ausstoß von Stickoxiden (NO*ₓ*) bei Dieselmotoren um bis zu 90 Prozent reduziert werden.

Leitungsstränge der eingangs genannten Art sind Bestandteile von SCR-Systemen, welche bevorzugt einen SCR-Saugleitungsstrang, einen SCR-Rücklaufleitungsstrang und einen SCR-Druckleitungsstrang sowie einen Reduktionsmittel-Tank, eine Reduktionsmittel-Pumpeinheit und eine Reduktionsmittel-Dosiereinheit umfassen.

Das Reduktionsmittel wird mittels der Reduktionsmittel-Pumpeinheit der Reduktionsmittel-Dosiereinheit zugeführt. Die Reduktionsmittel-Dosiereinheit führt das Reduktionsmittel kontrolliert dem Abgasstrom der Brennkraftmaschine vor dem Katalysator zu. Da der Abgasstrom besonders heiß ist, entstehen in der Reduktionsmittel-Dosiereinheit hohe Temperaturen, die ein Kühlen der Reduktionsmittel-Dosiereinheit während des Betriebs der Brennkraftmaschine erfordern. Dabei wird die Reduktionsmittel-Dosiereinheit zum Beispiel mittels des Kühlwasserkreislaufs der Brennkraftmaschine gekühlt. Alternativ kann die Reduktionsmittel-Dosiereinheit mittels des Reduktionsmittels selbst gekühlt werden, wobei dafür aber mehr Reduktionsmittel als für den chemischen SCR-Prozess benötigt wird, welches in die Reduktionsmittel-Dosiereinheit befördert wird. Überschüssiges Reduktionsmittel wird dann mittels der Reduktionsmittel-Pumpeinheit über den SCR-Rücklaufleitungsstrang von der Reduktionsmittel-Dosiereinheit zurück in die Reduktionsmittel-Tankeinheit gefördert. Die Reduktionsmittel-Dosiereinheit, die Reduktionsmittel-Tankeinheit und die Reduktionsmittel-Pumpeinheit werden über geeignete Kupplungen mittels der Leitungsstränge miteinander verbunden.

Die Brennkraftmaschinen werden auch bei niedrigen Temperaturen bis zu weniger als -12 °C eingesetzt, bei denen also das Reduktionsmittel in den verschiedenen Einheiten und in den Leitungen einfrieren kann, insbesondere, wenn wässrige Harnstofflösung als Reduktionsmittel verwendet wird. Dadurch kann das SCR-System beschädigt werden. Um ein Einfrieren zu verhindern, werden die einzelnen Einheiten und die Leitungen, wenn nötig, insbesondere in Abhängigkeit von den Außentemperaturen und der Betriebsphase, beheizt.

Dazu sind insbesondere elektrisch beheizbare Einheiten und Leitungen bekannt, wie diese beispielsweise in der DE 10 2010 055 520 A1 beschrieben sind.

In der EP 1 770 251 A1 und in der EP 2 010 768 A1 sind bekannte SCR-Leitungsbündel beschrieben, bei denen eine das Reduktionsmittel führende Leitung für den Vorlauf und eine das Reduktionsmittel führende Leitung für den Rücklauf vorhanden sind, wobei zu jeder Reduktionsmittel führenden Leitung eine als Temperiermittel Heizwasser führende Leitung paarig in enger Nachbarschaft wärmeabgebend angeordnet ist, und wobei die Leitungspaare in zum Außenumfang offenen, axial verlaufenden Ausnehmungen eines aus einem wärmeleitfähigen, elastomeren Werkstoff bestehenden Strangprofils gehalten sind. Dabei wird das Heizwasser aus dem Kühlwasserkreislauf der Brennkraftmaschine abgezweigt. Die Leitungen weisen geeignete Steckkupplungen auf, um sie mit den verschiedenen Einheiten des SCR-Systems und mit dem Kühlwasserkreislauf zu verbinden. Die Steckkupplungen umfassen von dem Heizwasser durchspülte Anschlussblöcke, die ein Einfrieren der Steckkupplungen verhindern sollen. Derartige SCR-Leitungsbündel haben den Nachteil, dass sie durch Umwelteinflüsse beschädigt werden können. Außerdem ist die Montage derartiger SCR-Leitungen und SCR-Leitungsbündel kaum flexibel, darüber hinaus aufwändig, und sie benötigen relativ viel Montageraum.

Um dem abzuhelfen, wurde in der DE 10 2014 112 731 A1 eine technische Lösung für einen temperierten SCR-Leitungsstrang beschrieben, die vorsieht, dass die jeweils gleichseitigen Enden der ersten Leitung, also der Leitung zum Führen des Reduktionsmittels, vorzugsweise einer Schlauchleitung, und der Hülle, vorzugsweise eines Rohres, wie insbesondere eines Wellrohres, mit einem Reduktionsmittel-Kupplungsgehäuse verbunden sind, und die Enden der zweiten Leitung, also der Leitung zum Führen eines Temperiermittels, ebenfalls einer Schlauchleitung, jeweils mit einem von diesem Kupplungsgehäuse separaten Temperiermittelleitungs-Kupplungsteil verbunden sind, wobei das Reduktionsmittel-Kupplungsgehäuse an seinem Außenumfang eine Durchgangsöffnung aufweist, durch welche die Temperiermittelleitung aus dem Inneren des Hüllrohres nach außen geführt ist. Bei dieser bekannten technischen Lösung handelt es sich um einen Leitungsstrang der eingangs genannten Art, der es gestattet, die Temperiermittelleitung zunächst auch in dem Gehäuse abschnittsweise parallel zur Reduktionsmittelleitung zu führen, dann aber abzuzweigen und über ein oder mehrere Formbiegungen für einen gegenüber dem Reduktionsmittelanschluss stark versetzten Anschluss des Temperiermittelleitungs-Kupplungsteils zurückzuführen. Das Reduktionsmittel-Kupplungsgehäuse ist dabei bevorzugt aus zwei zusammenfügbaren Gehäuseschalen gebildet, wobei sich die Durchgangsöffnung für die Temperiermittelleitung bevorzugt vollständig in einer der beiden Schalen befindet. Diese bekannte technische Lösung gewährleistet eine ausreichende Temperierung des SCR-Systems, wobei der Leitungsstrang bzw. auch das ebenfalls beschriebene Leitungsbündel mit SCR-Saugleitungsstrang, SCR-Rücklaufleitungsstrang und SCR-Druckleitungsstrang in verschiedenen Einbausituationen und Anwendungsfällen flexibel und einfach montiert werden können und zudem kostengünstig herzustellen sind. Nachteiligerweise bleibt dabei aber der im Gehäuse befindliche Abschnitt der Reduktionsmittel-Leitung unbeheizt oder muss zusätzlich elektrisch beheizt werden. Der Erfindung liegt die Aufgabe zugrunde, einen Leitungsstrang der eingangs genannten Art zur temperierten Führung eines Reduktionsmittels zur Verfügung zu stellen, der in verschiedenen Einbausituationen und Anwendungsfällen flexibel und einfach montiert werden kann, zudem kostengünstig herstellbar ist und im Vergleich mit dem Stand der Technik eine verbesserte Temperierung des SCR-Systems gewährleistet. Auf eine zusätzliche elektrische Beheizung soll dabei verzichtet werden können.

Die Aufgabe wird erfindungsgemäß dadurch gelöst, dass beide Leitungen benachbart zueinander verlaufend, insbesondere parallel, durch das gesamte Kupplungsgehäuse geführt sind.

Vorteilhafterweise kann somit die erste Leitung zum Führen des Reduktionsmittels, an der sich gegebenenfalls ein Leitungsverbinder befinden kann, nicht nur - wie gemäß dem Stand der Technik - partiell, sondern über ihre ganze im Gehäuse liegende Strecke mittels der zweiten Leitung zum Führen des Temperiermittels erwärmt werden. Die Notwendigkeit einer zusätzlichen elektrischen Beheizung entfällt dadurch. Als eine Leitungsführungs-Gesamtlänge des Kupplungsgehäuses kann dabei die jeweilige Länge der Leitungen einschließlich gegebenenfalls vorhandener Verbinder, sofern sich diese im Gehäuse befinden, angesehen werden. Der einfache Aufbau mit den zwei parallel in der Hülle und dann im Gehäuse geführten Leitungen ermöglicht eine einfache Herstellung des erfindungsgemäßen Stranges und einen ausreichenden Schutz der Leitungen sowie eine effektive Übertragung von der zweiten Leitung auf die erste Leitung.

Hinsichtlich der konkreten Ausbildung der Leitungen wird anmeldungsgemäß folgende Begrifflichkeit zugrunde gelegt. "Rohr" bedeutet eine formstabile Leitung mit geschlossenem Querschnitt, die besonders geeignet ist für das Fördern der in Frage stehenden Fluide "Reduktionsmittel" und "Temperiermittel". "Schlauch" bedeutet eine flexible Leitung mit geschlossenem Querschnitt mit der besonderen Eignung zum Fördern dieser Fluide. Für die beiden Leitungen sind dabei sämtliche Kombinationen - also Schlauch / Schlauch, Schlauch / Rohr und Rohr / Rohr - möglich, wobei der erstgenannten Schlauch-Schlauch-Kombination der Vorzug gegeben wird. Formstabile Leitungen, also Rohre, können aus einem thermoplastischen Werkstoff, wie aus Polyamid, insbesondere aus dem Werkstoff PA 12, hergestellt sein. Flexible Leitungen, also Schläuche, können aus einem elastomeren Werkstoff, wie aus einem thermoplastischen Elastomer, gegebenenfalls mit einer Verstärkungseinlage, gefertigt sein.

Die Hülle kann ebenfalls flexibel oder formstabil ausgebildet sein, wobei bei einer bevorzugten Ausbildung als Wellrohr im Gegensatz zur vorstehenden Definition je nach dem verwendeten Material und der Wandstärke auch eine weniger oder vorzugsweise mehr ausgeprägte Flexibilität vorliegen kann, so dass von einem Wellrohr umhüllte Schlauchleitungen insbesondere ohne die Notwendigkeit einer thermoplastischen Aufweichung des Wellrohres gebogen und verlegt werden können.

Nach einem Eintritt durch eine gemeinsame Eintrittsöffnung des Kupplungsgehäuses für die beiden parallel geführten und von der Hülle insbesondere vollständig umfassten Leitungen auf einer Eintrittsseite des Gehäuses kann die Hülle dann in einem sich an die Eintrittsöffnung anschließenden Eintritts-Endbereich des Kupplungsgehäuses, der eine Hüllenaufnahme ausbildet, enden, so dass die beiden Leitungen jeweils separat voneinander durch das übrige Gehäuse verlaufen.

Im Inneren des Kupplungsgehäuses kann sich unter weitgehendem Verzicht auf störende, den Wärmeübergang behindernde Trennwände zwischen den beiden Leitungen die Wärmeübertragung in einem gemeinsamen Aufnahmeraum für die beiden Leitungen, der auch als Luftkammer bezeichnet werden könnte, vollziehen. Um dabei den konvektiven Anteil der Wärmeübertragung zugunsten des Wärmeleitungsanteils zu minimieren, ist es dabei von Vorteil, wenn die beiden Leitungen zumindest bereichsweise weiterhin - so, wie bei der Umfassung mit der Hülle vor der Einführung in das Gehäuse - unmittelbar aneinander anliegen.

Das Kupplungsgehäuse kann aus insbesondere zwei, oder auch aus mehr, zusammenfügbaren bzw. zusammengefügten Gehäuseschalen gebildet sein, wobei diese Gehäuseschalen bevorzugt in fertigungstechnisch vorteilhafter Weise - unter dem Gesichtspunkt, dass nicht wie gemäß der DE 10 2014 112 731 A1 in nur einer Schale eine Durchgangsöffnung am Außenumfang vorgesehen ist - hinsichtlich einer durch die Längsache des Gehäuses verlaufende Mittenebene als symmetrisch ausgebildete Halbschalen ausgebildet sein können. Die Gehäuseschalen können im Hinblick auf eine hohe Montagefreundlichkeit und im Hinblick auf die Möglichkeit einer bedarfsweise einfachen Trennung voneinander zur Demontage durch an ihnen ausgebildete, entsprechend komplementär zueinander gestaltete Rastelemente miteinander verrastbar gestaltet sein. Das Kupplungsgehäuse kann aus einem thermoplastischen Werkstoff, wie aus Polyamid, insbesondere aus dem Werkstoff PA 6 oder PA 66, hergestellt sein. Es kann in technologisch vorteilhafter Weise in einem Spritzgießprozess gefertigt werden.

Auf der Austrittsseite des Kupplungsgehäuses, die der Eintrittsseite axial entgegengesetzt ist, können separate Austrittsöffnungen für die beiden, bis zu dieser Austrittsseite parallel geführten Leitungen liegen. Hierbei kann insbesondere die Temperiermittelleitung einfach aus dem Gehäuse herausgeführt werden, oder - ebenso, wie bevorzugt die Reduktionsmittelleitung - in einer die Erfindung weiterbildenden Ausführung innerhalb des Gehäuses in einem Steckanschluss enden. Die Umfassung der beiden Austrittsöffnungen durch das gemeinsame Gehäuse bewirkt dabei, dass der erfindungsgemäße Leitungsstrang auch bei besonders kleinen Montageraumanforderungen unter Vermeidung seitlicher Leitungsabzweigungen einfach montiert werden kann.

Die Austrittsöffnungen können dabei in einer Gehäuseebene oder in zwei parallel zueinander versetzten Gehäuseebenen an der Austrittseite liegen, so dass vorteilhafterweise ein jeweils am Ende der ersten Leitung zum Führen des Reduktionsmittels und am Ende der zweiten Leitung zum Führen eines Temperiermittels befindlicher Steckverbinder parallel bzw. gleichzeitig in jeweils korrespondierende Kupplungsteile gesteckt werden können. Diese Möglichkeit der gemeinsamen Steckbarkeit stellt einen weiteren Vorteil der Erfindung dar. Das freie Ende des erfindungsgemäßen Leitungsstrangs ist solchermaßen dann als Reduktionsmittel-Temperiermittel-Leitungs-Doppelstecker ausgebildet.

Das freie, zum Anschluss bestimmte Ende des erfindungsgemäßen Leitungsstrangs, und dabei insbesondere dessen Gehäuse, kann geradlinig oder - wie im nachfolgenden Ausführungsbeispiel gezeigt - in bevorzugter Ausbildung als Winkelstück, also mit einem Knick bzw. Bogen im Verlauf längs der Leitungen, insbesondere mit einer um - integral gesehen - 90° gewinkelten Längsachse, ausgebildet sein.

Im Rahmen der Anmeldung wird der Ausdruck "Verbinder" als übergeordneter Begriff für die Begriffe "Stecker" / "Steckverbinder" / "Steckverbinderteil" (englisch: "male part") - soweit diese Begriffe verwendet werden - und für die Begriffe "Steckkupplung" / "Steckmuffe" / "Muffenteil" (englisch: "female part") - soweit diese Begriffe verwendet werden - verstanden, wobei sich am jeweiligen freien Ende sowohl der Temperiermittelleitung als auch der Reduktionsmittelleitung wahlweise entweder ein Steckerteil oder ein Muffenteil als Verbinder befinden kann. Vorteilhafterweise können auch - soweit vorhanden - jeweils endseitig an beiden Leitungen befindliche Verbinder derart angeordnet werden, dass ein vertauschter Anschluss nicht möglich ist, indem z. B. für die Temperiermittelleitung eine Stecckupplung bzw. Steckmuffe und für die Temperiermittelleitung ein Stecker verwendet wird, oder umgekehrt. In einem solchen Fall sind auch gleiche Nenngrößen für Muffenteil und Stecker möglich, ohne dass dadurch die Gefahr einer Fehlmontage bestünde. Unterschiedliche Nenngrößen verhindern ja per se ebenfalls schon eine Fehlmontage. Dies entspricht in konkreter Anwendung dem von dem Japaner Shigeo Shingö entwickelten allgemeinen Prinzip des "Poka Yoke", was aus dem Japanischen übersetzt so viel heißt, wie "unglückliche Fehler" - in diesem Fall Montagefehler - "zu vermeiden". Eine entsprechende Ausführung der Ausgangsseite des erfindungsgemäßen Leitungsstrangs beinhaltet somit eine technische Vorkehrung zur Fehlerverhinderung, wenn der erfindungsgemäße Leitungsstrang bei der Montage in ein SCR-System eingebunden wird.

Eine im Gehäuse ausgebildete Verbinder-Aufnahme für den Temperiermittelanschluss kann durch eine geringfügige Überdimensionierung des in einem Austritts-Endbereich des Kupplungsgehäuses befindlichen Aufnahmeraumes für den Verbinder derart ausgeführt sein, dass ein radialer und axialer Toleranzausgleich beim Stecken existiert. Es liegt somit ein "Spiel der Aufnahme" vor, was die Steckbarkeit insbesondere vorteilhafterweise dann verbessert, wenn zwei Verbinder parallel gesteckt werden.

Innerhalb des Kupplungsgehäuses können die Leitungen, zumindest aber eine Leitung, wie bevorzugt die zweite Leitung zum Führen des Temperiermittels, Biegungen aufweisen. Diese Biegungen ermöglichen einen optimierten Verlauf der Leitungen aneinander bzw. entlang von an den Leitungen befindlichen Verbindern, wodurch der Bauraum im Gehäuse optimal ausgenutzt und der Wärmeaustausch intensiviert werden kann. Die Form des Verlaufs der Leitungen wird dabei durch die Innenausbildung des Gehäuses bestimmt, wobei im Gehäuse zu diesem Zweck umlaufende Stege und/oder formgebende bzw. formführende, insbesondere punktartige, Stützelemente angeordnet, insbesondere angeformt, sein können. Im Sinne der Verhinderung eines die Wärmeübertragung behindernden Einflusses kann die Anzahl solcher Stege bzw. Stützelemente auf ein notwendiges Minimum reduziert werden und sie können auch nur einseitig in einer Gehäusehälfte angeordnet sein. Die erste Leitung und/oder die zweite Leitung können dadurch jeweils zumindest abschnittsweise geradlinig und/oder bogenförmig durch das Kupplungsgehäuse geführt sein.

Weitere vorteilhafte Ausgestaltungen der Erfindung ergeben sich aus der folgenden Figurenbeschreibung und den abhängigen Unteransprüchen.

Es zeigen:
- Fig. 1: eine perspektivische Explosionszeichnung eines Endes einer bevorzugten Ausführungsform eines erfindungsgemäßen Leitungsstranges bei halboffenem Kupplungsgehäuse,
- Fig. 2: eine dreidimensionale Ansicht des in Fig. 1 dargestellten Endes des erfindungsgemäßen Leitungsstranges, jedoch bei geschlossenem Kupplungsgehäuse und
- Fig. 3: eine perspektivische Explosionszeichnung eines geöffneten Kupplungsgehäuses der bevorzugten Ausführungsform eines erfindungsgemäßen Leitungsstranges gemäß Fig. 1 und 2.

In den verschiedenen Figuren der Zeichnung sind gleiche Teile stets mit denselben Bezugszeichen versehen und werden daher in der Regel nur einmal beschrieben.

In Bezug auf die anschließende Beschreibung wird dabei beansprucht, dass die Erfindung nicht auf das Ausführungsbeispiel und dabei nicht auf alle oder mehrere Merkmale von beschriebenen Merkmalskombinationen beschränkt ist, vielmehr ist jedes einzelne Teilmerkmal des Ausführungsbeispiels auch losgelöst von allen anderen im Zusammenhang damit beschriebenen Teilmerkmalen für sich und auch in Kombination mit anderen Merkmalen von Bedeutung für den Gegenstand der Erfindung.

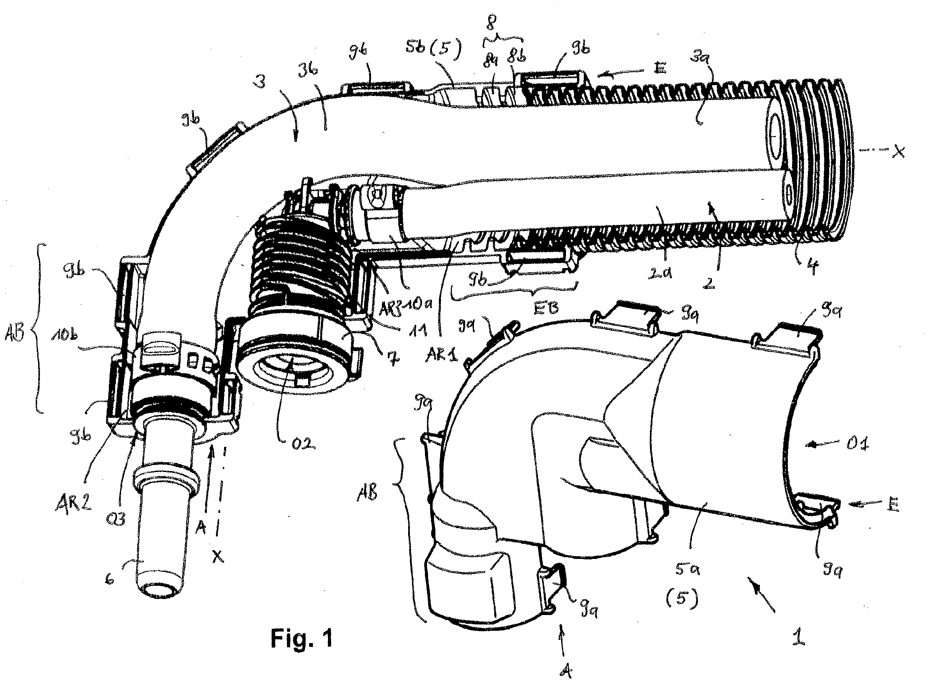

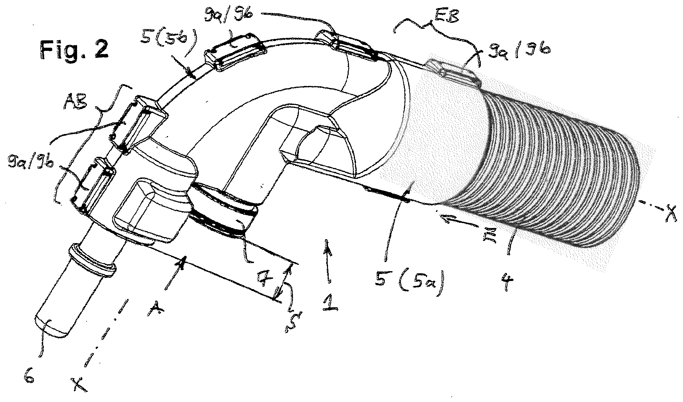

Wie in Fig. 1 und Fig. 2 gezeigt, bezieht sich die Erfindung auf einen Leitungsstrang 1 zur temperierten Führung eines Reduktionsmittels für die Abgasnachbehandlung einer Brennkraftmaschine. Der Leitungsstrang umfasst eine erste Leitung 2 zum Führen des Reduktionsmittels und eine zweite Leitung 3 zum Führen eines Temperiermittels sowie eine die beiden Leitungen 2, 3 umgebende Hülle 4, wobei die beiden Leitungen 2, 3 in der Hülle 4 nebeneinander verlaufend angeordnet sind und in einem Kupplungsgehäuse 5 geführt sind. Die Hülle 4 ist mit dem Kupplungsgehäuse 5 verbunden. Insbesondere sind die beiden Leitungen 2, 3 einseitig zusammen mit der Hülle 4 in dem Kupplungsgehäuse 5 festgelegt.

Beide Leitungen 2, 3 sind in bevorzugter Ausbildung jeweils als Schlauch ausgebildet und aus einem elastomeren Werkstoff, wie aus einem thermoplastischen Elastomer, gegebenenfalls mit einer Verstärkungseinlage, hergestellt.

Erfindungsgemäß sind beide Leitungen 2, 3 benachbart, insbesondere unmittelbar benachbart, vorzugsweise parallel, durch das gesamte Kupplungsgehäuse 5 geführt, wobei sie von einer Eintrittsseite E zu einer axial entgegengesetzten Austrittsseite A verlaufen. Die zweite Leitung 3 zum Führen eines Temperiermittels könnte auch schraubenförmig um die erste Leitung 2 zum Führen des Reduktionsmittels gewunden sein. Als eine Leitungsführungs-Gesamtlänge des Kupplungsgehäuses 5 wird dabei die jeweilige Länge der Leitungen 2, 3, also der Schläuche, einschließlich der optional vorhandenen, in Fig. 1 und 2 dargestellten Verbinder 6, 7 angesehen, insofern sich die Leitungen 2, 3 und die Verbinder 6, 7 im Gehäuse 5 erstrecken.

Die Hülle 4 ist bevorzugt flexibel und insbesondere als Rohr, vorzugsweise - wie dargestellt - als Wellrohr, ausgebildet. Die Hülle 4 endet in einem sich an die Eintrittsöffnung O1 anschließenden, mittels zweier Stege 8a, 8b eine Hüllenaufnahme 8 bildenden Eintritts-Endbereich EB des Kupplungsgehäuses 5. In der Hüllenaufnahme 8 ist das Wellrohr zumindest formschlüssig, gegebenenfalls auch kraftschlüssig und/oder stoffschlüssig, festgelegt.

Die beiden Leitungen 2, 3 verlaufen dann jeweils separat durch das übrige Gehäuse 5, insbesondere mindestens partiell durch einen gemeinsamen Aufnahmeraum AR1 für die beiden Leitungen 2, 3, wobei die beiden Leitungen 2, 3, vorzugsweise zumindest bereichsweise, unmittelbar aneinander anliegen.

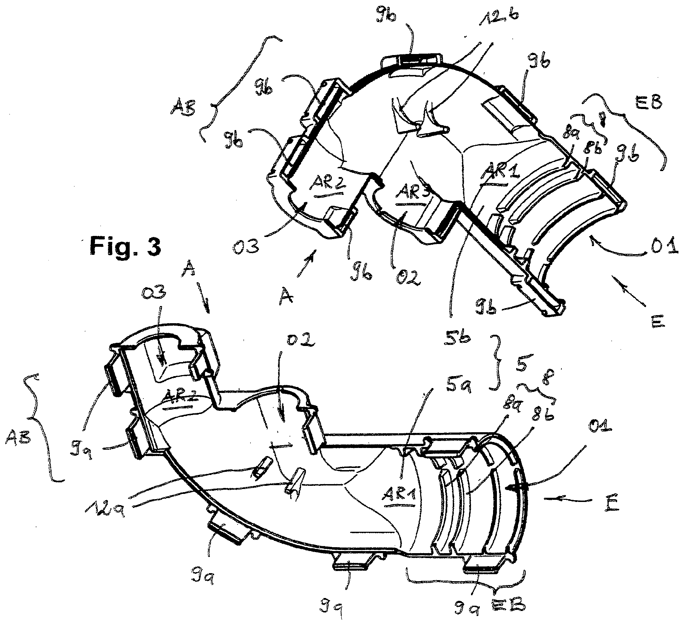

Das Kupplungsgehäuse 5, welches separat in Fig. 3 dargestellt ist, kann aus einem thermoplastischen Werkstoff, wie aus Polyamid, insbesondere aus dem Werkstoff PA 6 oder PA 66, hergestellt sein. Es ist in der gezeigten Darstellung aus zwei zusammenfügbaren bzw. in Fig. 2 zusammengefügten Gehäuseschalen 5a, 5b gebildet, wobei die Gehäuseschalen 5a, 5b bevorzugt hinsichtlich einer durch die Längsachse X-X des Gehäuses 5 verlaufenden Mittenebene als symmetrisch ausgebildete Halbschalen ausgebildet sind. Die nicht näher bezeichnete Mittenebene ist die Teilungsebene in Fig. 1. Die Gehäuseschalen 5a, 5b weisen komplementär zueinander ausgebildete Rastelemente 9a, 9b auf, mittels derer die Gehäuseschalen 5a, 5b miteinander verrastbar sind. Die Rastelemente 9a, 9b befinden sich sowohl im Eintritts-Endbereich EB auf der Eintrittsseite E, als auch in einem Austritts-Endbereich AB auf der axial (Gehäuseachse X-X) entgegengesetzten Austrittsseite A des Gehäuses 5 für die Leitungen 2, 3.

Das Kupplungsgehäuse 5 weist auf seiner Eintrittsseite E eine einzige gemeinsame Eintrittsöffnung O1 für die beiden von der Hülle 4 umgebenen Leitungen 2, 3, und auf seiner Austrittsseite A zwei separate Austrittsöffnungen 02, 03 auf, genau eine erste Austrittsöffnung 02 für die erste Leitung 2 zum Führen des Reduktionsmittels und genau eine zweite Austrittsöffnung 03 für die zweite Leitung 3 zum Führen des Temperiermittels. Die Austrittsöffnungen 02, 03 liegen an der Austrittseite A in zwei zueinander versetzten Gehäuseebenen, deren Flächennormalen insbesondere jeweils parallel zur Gehäuse-Längsachse X-X verlaufen. Diese Ebenen sind also vorzugsweise mit axialem Abstand (Bezugszeichen S in Fig. 2) parallel zueinander angeordnet, wobei die Gehäuseachse X-X senkrecht auf ihnen steht.

Jeweils am Ende der ersten Leitung 2 und am Ende der zweiten Leitung 3 befinden sich die bereits erwähnten Verbinder 6, 7, wobei diese im Austritts-Endbereich AB im Kupplungsgehäuse 5 festgelegt sind und aus dem Kupplungsgehäuse 5 herausragen. Die Verbinder 6, 7 sind jeweils in die Leitungen 2, 3 eingesteckt und jeweils mit einer Schlauchschelle 10a, 10b befestigt, wie dies Fig. 1 zeigt.

Bei dem Verbinder 7 an der ersten Leitung 2, die dem Führen des Reduktionsmittels dient, handelt es sich um ein Muffenteil, insbesondere um einen Winkelverbinder, der den Fluss des Fluids in seinem Inneren um 90° umlenkt. Dadurch kann der (einzige) im Gehäuse 5 liegende Schlauchabschnitt 2a der ersten Leitung 2 ausschließlich geradlinig - also ohne Bögen und Krümmungen - durch das Kupplungsgehäuse 5 geführt werden.

Bei dem Verbinder 6 an der zweiten Leitung 3, die dem Führen des Temperiermittels dient, handelt es sich um ein - bevorzugt geradlinig ausgebildetes - Steckerteil.

Die Verbinder 6, 7 sind somit derart angeordnet, dass ein Vertauschen nicht möglich ist, was dem bereits erläuterten Prinzip des "Poka Yoke" entspricht. So sind für die Verbinder 7, 6 der Leitungen 2, 3 sowohl unterschiedliche als auch gleiche Nenngrößen für Kupplung und Stecker möglich, ohne dass die Gefahr von Montagefehlern besteht. Beide Verbinder 6, 7 können gleichzeitig mit nicht dargestellten, jeweils komplementären Verbinderteilen gekuppelt werden.

Ein Schlauchabschnitt 3b der zweiten Leitung 3, welcher sich von der Eintrittsseite E wegweisend an einen geradlinigen Schlauchabschnitt 3a anschließt, ist dabei bogenförmig durch das Kupplungsgehäuse 5 geführt. Der bogenförmige Schlauchabschnitt 3b umfasst umfangsgemäß den im Gehäuse 5 liegenden Schlauchabschnitt 2a der ersten Leitung 2 sowie den daran befindlichen Verbinder 7 auf deren Außenseiten, so dass dadurch, dass die zweite Leitung 3 mit größerem Krümmungsradius auf der Außenseite und die erste Leitung 3 mit kleinerem Krümmungsradius auf der Innenseite liegt, zur Temperierung der ersten Leitung 2 eine maximal große Fläche für den Wärmeübergang zur Verfügung steht. Auf eine elektrische Beheizung kann dabei verzichtet werden.

Dennoch ist Fig. 1 zu entnehmen, dass das Muffenteil, also der Verbinder 7 der ersten Leitung 2, Heizlitzen-Führungselemente 11 auf seinem Außenumfang trägt. Diese konventionelle Funktion des Muffenteils als Träger für elektrische Heizdrähte ist für herkömmliche Verbinderteile üblich. Diese herkömmlichen Teile können aber vorteilhafterweise im Sinne einer hohen Flexibilität im Rahmen der Erfindung zum Einsatz kommen. Die Trägerfunktion für die Heizleiter wird dabei erfindungsgemäß allerdings nicht ausgenutzt. Vielmehr vergrößern die Heizlitzen-Führungselemente 11 aber mit Vorteil die Wärmeaustauschfläche an dem Verbinder 7. Es besteht natürlich auch die Möglichkeit, die Heizlitzen-Führungselemente 11 wegzulassen und die Temperiermittelleitung 3 direkt am Verbinder 7 entlang zu führen.

Wie des Weiteren Fig. 1 zu entnehmen ist, kann ein jeweiliger im Kupplungsgehäuse 5 ausgebildeter, im Austritts-Endbereich AB des Kupplungsgehäuses 5 befindlicher Aufnahmeraum AR2, AR3 für einen Verbinder 6, 7, insbesondere der Aufnahmeraum AR2 für den an der zweiten Leitung 3 zum Führen des Temperiermittels befindlichen Verbinder 6, eine geringfügige Überdimensionierung gegenüber der äußeren Größe des Verbinders 6 aufweisen, so dass der Verbinder 6 mit Spiel in dem jeweiligen Aufnahmeraum AR2, AR3 liegt. Dies verbessert die Montagefreundlichkeit, insbesondere dann, wenn beide Verbinder 6, 7 parallel gesteckt werden, da dadurch ein radialer und axialer Toleranzausgleich beim Stecken bewirkt wird.

Im Kupplungsgehäuse 5 können mit Vorteil formführende und/oder formgebende Stützelemente 12 angeordnet, insbesondere angeformt sein, wie umlaufende Stege, Zwischenwände und/oder insbesondere punktartige Stütznoppen. Exemplarisch sind dafür in Fig. 3 einander komplementäre, den jeweiligen Umfang der Leitungen 2, 3 zumindest teilweise umgreifende, hakenförmige Halteelemente 12a, 12b in den Gehäuseteilen 5a, 5b des Kupplungsgehäuses 5 dargestellt. Auf massive Zwischenwände, die den Wärmeaustausch behindern könnten, kann mit Vorteil verzichtet werden.

Das Kupplungsgehäuse 5 könnte - im Gegensatz zur dargestellten Ausführung - auch komplett als Formteil um die in ihm liegenden Teile gespritzt sein.

Des Weiteren könnte das Material des Kupplungsgehäuses 5 eine erhöhte spezifische Wärmeleitfähigkeit (beispielsweise ≥ 5 W/(m K), vorzugsweise ≥ 10 W/(m K), besonders bevorzugt ≥ 30 W/(m K), gemessen nach DIN EN ISO 8302:1991, bei 0 °C, im Vergleich mit Kunststoffen aufweisen, um im Gehäuseinneren eine bessere Wärmeverteilung zu erreichen. So ist bei Kunststoffen üblicherweise von einer spezifischen Wärmeleitfähigkeit im Bereich von 0,15 W/(m K) bis 0,6 W/m K, für Polyamid insbesondere im Bereich von 0,25 W/(m K) bis 0,35 W/(m K), auszugehen. Kupferlegierungen, wie Messing, weisen stattdessen eine spezifische Wärmeleitfähigkeit im Bereich von 30 W/(m K) bis 110 W/(m K) auf. In Kunststoff eingebettete Metallpartikel oder Armierungen heben - integral gesehen - die spezifische Wärmeleitfähigkeit des Kupplungsgehäuses 5 an. Um jedoch zu verhindern, dass die Wärme aus dem Kupplungsgehäuse 5 nach außen abgeleitet wird, kann das Kupplungsgehäuse 5 doppelwandig ausgeführt werden, wobei es eine höher wärmeleitende Innenwandung und eine niedriger wärmeleitende Außenwandung aufweist.

Die Erfindung ist nicht auf das dargestellte und beschriebene Ausführungsbeispiel beschränkt, sondern umfasst auch alle im Sinne der Erfindung gleichwirkenden Ausführungen. Es wird ausdrücklich betont, dass das Ausführungsbeispiel nicht auf alle Merkmale in Kombination beschränkt ist, vielmehr kann jedes einzelne Teilmerkmal auch losgelöst von allen anderen Teilmerkmalen für sich eine erfinderische Bedeutung haben. So können die beiden Gehäuseschalen 5a, 5b auch asymmetrisch ausgebildet sein. Die Verbinder 6, 7 können außerhalb des Gehäuses 5 liegen und/oder anders als dargestellt ausgeführt sein. Beispielsweise kann es sich auch um zwei miteinander kombinierte Steckerteile oder zwei Muffenteile handeln. Die Hülle 4 könnte auch auf der Eintrittsseite E des Kupplungsgehäuses vor der Eintrittsöffnung O1 enden, wobei dann nur die beiden Leitungen 2, 3 durch die Eintrittsöffnung O1 geführt sind. Auch kann vorgesehen sein, Wärmeübertragungselemente zwischen Kühlwasserschlauch und Verbinder anzuordnen, wobei hierfür die verschiedensten Möglichkeiten zur Verfügung stehen, wie metallische Einsatzteile, ein Verguss mit einer besonders wärmeleitfähigen Masse, die Applizierung von Gelkissen usw..

Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann.

### Bezugszeichenliste

- 1: Leitungsstrang
- 2: erste Leitung von 1
- 2a: gerader Abschnitt von 2
- 3: zweite Leitung von 1
- 3a: gerader Abschnitt von 3
- 3b: gebogener Abschnitt von 3
- 4: Hülle von 1 um 2 und 3
- 5: Kupplungsgehäuse von 1
- 5a: erstes Gehäuseteil von 5
- 5b: zweites Gehäuseteil von 5
- 6: Verbinder an 3
- 7: Verbinder an 2
- 8: Hüllenaufnahme in 5 für 4
- 8a, 8b: Stege von 8 in 5
- 9a: Rastelement an 5a
- 9b: Rastelement an 5b
- 10a: Schlauchschelle an 2
- 10b: Schlauchschelle an 3
- 11: Heizlitzen-Führungselement auf 7
- 12a: Stützelement in 5a für 2, 3, 6, 7
- 12b: Stützelement in 5b für 2, 3, 6, 7

- A: Austrittsseite von 1/5
- AB: Austritts-Endbereich von 5
- AR1: Aufnahmeraum für 2, 3 in 5
- AR2: Aufnahmeraum für 6 in 5
- AR3: Aufnahmeraum für 7 in 5
- E: Eintrittsseite von 1/5
- EB: Eintritts-Endbereich von 5
- O1: Eintrittsöffnung für 2/3/4
- 02: Austrittsöffnung für 2
- 03: Austrittsöffnung für 3
- S: axialer Abstand von 02 an A und 03 an A (Fig. 2)
- X-X: Längsachse von 1/5

## Patentansprüche

1. Leitungsstrang (1) zur temperierten Führung eines Reduktionsmittels für die Abgasnachbehandlung einer Brennkraftmaschine, umfassend eine erste Leitung (2) zum Führen des Reduktionsmittels, eine zweite Leitung (3) zum Führen eines Temperiermittels und eine die beiden Leitungen (2, 3) umgebende Hülle (4), wobei die beiden Leitungen (2, 3) in der Hülle (4) benachbart zueinander verlaufend angeordnet und in einem Kupplungsgehäuse (5) geführt sind und die Hülle (4) mit dem Kupplungsgehäuse (5) verbunden ist,
**dadurch gekennzeichnet, dass** beide Leitungen (2, 3) benachbart zueinander verlaufend durch das gesamte Kupplungsgehäuse (5) geführt sind.

2. Leitungsstrang (1) nach Anspruch 1,
**dadurch gekennzeichnet, dass** beide Leitungen (2, 3) parallel zueinander verlaufend, insbesondere unmittelbar aneinander anliegend, durch das gesamte Kupplungsgehäuse (5) geführt sind.

3. Leitungsstrang (1) nach Anspruch 1 oder 2,
**dadurch gekennzeichnet, dass** die erste Leitung (2) und die zweite Leitung (3) zusammen mit der Hülle (4) in dem Kupplungsgehäuse (5) festgelegt sind, wobei die Hülle (4) insbesondere in dem Kupplungsgehäuse (5) zumindest fomschlüssig gehalten ist.

4. Leitungsstrang (1) nach einem der Ansprüche 1 bis 3,
**dadurch gekennzeichnet, dass** die erste Leitung (2) und/oder die zweite Leitung (3) jeweils als Rohr ausgebildet ist und vorzugsweise aus einem thermoplastischen Werkstoff, wie aus Polyamid, insbesondere aus PA 12, hergestellt ist.

5. Leitungsstrang (1) nach einem der Ansprüche 1 bis 3,
**dadurch gekennzeichnet, dass** die erste Leitung (2) und/oder die zweite Leitung (3) jeweils als Schlauch ausgebildet ist und vorzugsweise aus einem elastomeren Werkstoff, wie aus einem thermoplastischen Elastomer, gegebenenfalls mit einer Verstärkungseinlage, hergestellt ist.

6. Leitungsstrang (1) nach Anspruch 4,
**dadurch gekennzeichnet, dass** das Rohr als Wellrohr ausgebildet ist.

7. Leitungsstrang (1) nach einem der Ansprüche 1 bis 6,
**dadurch gekennzeichnet, dass** das Kupplungsgehäuse (5) eine Eintrittsseite (E) und eine der Eintrittsseite (E) axial entgegengesetzte Austrittsseite (A) mit separaten Austrittsöffnungen (02, 03) für die beiden Leitungen (2, 3) aufweist.

8. Leitungsstrang (1) nach Anspruch 7,
**dadurch gekennzeichnet, dass** das Kupplungsgehäuse (5) auf der Eintrittsseite (E) eine gemeinsame Eintrittsöffnung (O1) für die beiden, insbesondere von der Hülle (4) umgebenen, Leitungen (2, 3) aufweist.

9. Leitungsstrang (1) nach Anspruch 7,
**dadurch gekennzeichnet, dass** die Austrittsöffnungen (02, 03) in zwei zueinander versetzten Gehäuseebenen liegen.

10. Leitungsstrang (1) nach einem der Ansprüche 1 bis 9,
**dadurch gekennzeichnet, dass** die Hülle (4) in einem sich an die Eintrittsöffnung (O1) anschließenden Eintritts-Endbereich (EB) des Kupplungsgehäuses (5), der eine Hüllenaufnahme ausbildet, endet, so dass die beiden Leitungen (2, 3) jeweils separat durch das übrige Gehäuse (5), insbesondere durch einen gemeinsamen Aufnahmeraum (AR1) für die beiden Leitungen, (2, 3) verlaufen, wobei die beiden Leitungen (2, 3) vorzugsweise zumindest bereichsweise unmittelbar aneinander anliegen.

11. Leitungsstrang (1) nach einem der Ansprüche 1 bis 10,
**dadurch gekennzeichnet, dass** das Kupplungsgehäuse (5) aus einem thermoplastischen Werkstoff, wie aus Polyamid, insbesondere aus dem Werkstoff PA 6 oder PA 66, hergestellt ist.

12. Leitungsstrang (1) nach einem der Ansprüche 1 bis 11,
**dadurch gekennzeichnet, dass** das Kupplungsgehäuse (5) aus mindestens zwei zusammengefügten Gehäuseschalen (5a, 5b) gebildet ist, wobei die Gehäuseschalen (5a, 5b) bevorzugt hinsichtlich einer durch die Längsachse (X-X) des Gehäuses (5) verlaufenden Mittenebene als symmetrisch ausgebildete Halbschalen ausgebildet sind.

13. Leitungsstrang (1) nach Anspruch 12,
**dadurch gekennzeichnet, dass** die Gehäuseschalen (5a, 5b) komplementär zueinander ausgebildete Rastelemente (9a, 9b) aufweisen, mittels derer die Gehäuseschalen (5a, 5b) miteinander verrastbar sind.

14. Leitungsstrang (1) nach einem der Ansprüche 1 bis 13,
**dadurch gekennzeichnet, dass** die erste Leitung (2) und die zweite Leitung (3) jeweils zumindest abschnittsweise geradlinig (2a, 3a) oder bogenförmig (3b) durch das Kupplungsgehäuse (5) geführt ist.

15. Leitungsstrang (1) nach einem der Ansprüche 1 bis 14,
**dadurch gekennzeichnet, dass** jeweils am Ende der ersten Leitung (2) und/oder am Ende der zweiten Leitung (3) im Kupplungsgehäuse (5) in einem Austritts-Endbereich (AB) oder außerhalb des Kupplungsgehäuses (5) ein Verbinder (6, 7), wie ein Steckerteil oder ein Muffenteil, befestigt ist.

16. Leitungsstrang (1) nach einem der Ansprüche 1 bis 15,
**dadurch gekennzeichnet, dass** sich jeweils am Ende der ersten Leitung (2) ein Steckerteil und am Ende der zweiten Leitung (3) ein Muffenteil oder am Ende der ersten Leitung (2) ein Muffenteil und am Ende der zweiten Leitung (3) ein Steckerteil als Verbinder (6, 7) befindet.

17. Leitungsstrang (1) nach einem der Ansprüche 1 bis 16,
**dadurch gekennzeichnet, dass** ein im Kupplungsgehäuse (5) ausgebildeter, in einem Austritts-Endbereich (AB1) des Kupplungsgehäuses (5) befindlicher Aufnahmeraum (AR2, AR3) für einen Verbinder (6, 7), insbesondere ein Aufnahmeraum (AR2) für einen an der zweiten Leitung (3) zum Führen des Temperiermittels befindlichen Verbinder (6), eine Überdimensionierung gegenüber dem Verbinder (6, 7) aufweist, so dass dieser mit Spiel in dem Aufnahmeraum (AR2, AR3) liegt.

18. Leitungsstrang (1) nach einem der Ansprüche 1 bis 17,
**dadurch gekennzeichnet, dass** im Kupplungsgehäuse (5) formführende und/oder formgebende Stützelemente (12a, 12b) angeordnet, insbesondere angeformt, sind, wie umlaufende Stege, punktartige Stütznoppen und/oder insbesondere in den Kupplungsteilen (5a, 5b) einander komplementäre, den jeweiligen Umfang der Leitungen (2, 3) zumindest teilweise umgreifende, hakenförmige Halteelemente (12a, 12b).

## Claims

1. Line section (1) for temperature-controlled guiding of a reductant for the exhaust gas post-treatment of an internal combustion engine, comprising a first line (2) for guiding the reductant, a second line (3) for guiding a temperature control agent, and a casing (4) surrounding the two lines (2, 3), wherein the two lines (2, 3) are disposed adjacent to each other in the casing (4) and guided in a coupling housing (5), and the casing (4) is connected to the coupling housing (5),
**characterized in that** both lines (2, 3) are guided through the entire coupling housing (5) extending adjacent to each other.

2. Line section (1) according to claim 1,
**characterized in that** both lines (2, 3) extending parallel to each other, in particular directly extending abutting against each other, are guided through the entire - coupling housing (5).

3. Line section (1) according to claim 1 or 2,
**characterized in that** the first line (2) and the second line (3) are fixed together with the casing (4) in the coupling housing (5), wherein the casing (4) is held in particular in the coupling housing (5), at least in a form-locked manner.

4. Line section (1) according to one of claims 1 to 3,
**characterized in that** the first line (2) and/or the second line (3) is each formed as a tube and manufactured from a thermoplastic material, such as from polyamide, in particular from PA 12.

5. Line section (1) according to one of claims 1 to 3,
**characterized in that** the first line (2) and/or the second line (3) is each formed as a hose and is preferably manufactured from an elastomeric material, such as from a thermoplastic elastomer, optionally including a reinforcing insert.

6. Line section (1) according to claim 4,
**characterized in that** the tube is formed as a corrugated tube.

7. Line section (1) according to one of claims 1 to 6,
**characterized in that** the coupling housing (5) includes an entry side (E) and an outlet side (A) axially opposite the entry side (E) including separate outlet openings (O2, O3) for the two lines (2, 3).

8. Line section (1) according to claim 7,
**characterized in that** the coupling housing (5) includes a common entry opening (O1) on the entry side (E) for the two lines (2, 3) surrounded in particular by the casing (4).

9. Line section (1) according to claim 6 or 7,
**characterized in that** the outlet openings (O2, O3) lie in two housing planes offset with respect to each other.

10. Line section (1) according to one of claims 1 to 9,
**characterized in that** the casing (4) ends in an entry end region (EB) of the coupling housing (5), which entry end region (EB) connects to the entry opening (O1) and forms a casing receptacle, so that the two lines (2, 3) each extend separately through the rest of the housing (5), in particular through a common receiving space (AR1) for the two lines, (2, 3), wherein the two lines (2, 3) preferably abut directly against each other at least in regions.

11. Line section (1) according to one of claims 1 to 10,
**characterized in that** the coupling housing (5) is manufactured from a thermoplastic material, such as from polyamide, in particular from the material PA 6 or PA 66.

12. Line section (1) according to one of claims 1 to 11,
**characterized in that** the coupling housing (5) is formed from at least two assembled housing shells (5a, 5b), wherein the housing shells (5a, 5b) are preferably formed as half shells formed symmetrically with respect to a central plane extending through the longitudinal axis (X-X) of the housing (5).

13. Line section (1) according to claim 12,
**characterized in that** the housing shells (5a, 5b) have locking elements (9a, 9b) formed complementary to each other, using which the housing shells (5a, 5b) are latchable to each other.

14. Line section (1) according to one of claims 1 to 13,
**characterized in that** the first line (2) and the second line (3) is each guided through the coupling housing (5) at least sectionally straight (2a, 3a) or arcuately (3b).

15. Line section (1) according to one of claims 1 to 14,
**characterized in that** a connector (6, 7) such as a plug part or a sleeve part, is attached respectively to the end of the first line (2) and/or to the end of the second line (3) in the coupling housing (5) in an outlet end region (AB) or outside the coupling housing (5).

16. Line section (1) according to one of claims 1 to 15,
**characterized in that** a plug part is located on each end of the first line (2) and a sleeve part on the end of the second line (3) or a sleeve part on the end of the first line (2) and a plug part as connector (6, 7) is located on the end of the second line (3).

17. Line section (1) according to one of claims 1 to 16,
**characterized in that** a receiving space (AR2, AR3) for a connector (6, 7), which receiving space (AR2, AR3) is formed in the coupling housing (5) and located in an outlet end region (AB1) of the coupling housing (5), in particular a receiving space (AR2) for a connector (6) located on the second line (3) for guiding the temperature control means, has an over-dimensioning with respect to the connector (6, 7) so that it lies in the receiving space (AR2, AR3) with clearance.

18. Line section (1) according to one of claims 1 to 17,
**characterized in that** shape-guiding and/or shaping support elements (12a, 12b) are disposed in the coupling housing (5), in particular formed, such as circumferential bridges, point-type support nubs and/or in particular in the coupling parts (5a, 5b) mutually complementary hook-shaped retaining elements (12a, 12b) at least partially engaging the respective circumference of the lines (2, 3).

## Revendications

1. Ligne de conduites (1) permettant le guidage thermorégulé d'un agent réducteur pour le post-traitement des gaz d'échappement d'un moteur à combustion interne, comportant une première conduite (2) pour le guidage de l'agent réducteur, une deuxième conduite (3) pour le guidage d'un agent de thermorégulation et une gaine (4) entourant les deux conduites (2, 3), dans laquelle les deux conduites (2, 3) sont disposées de façon à s'étendre de manière adjacente l'une à l'autre dans la gaine (4) et sont guidées dans un boîtier d'accouplement (5) et la gaine (4) est reliée au boîtier d'accouplement (5),
**caractérisée en ce que** les deux conduites (2, 3) sont guidées à travers tout le boîtier d'accouplement (5) de façon à s'étendre de manière adjacente l'une à l'autre.

2. Ligne de conduites (1) selon la revendication 1,
**caractérisée en ce que** les deux conduites (2, 3) sont guidées à travers tout le boîtier d'accouplement (5) de façon à s'étendre parallèlement l'une à l'autre, en particulier de manière directement adjacente l'une à l'autre.

3. Ligne de conduites (1) selon la revendication 1 ou 2,
**caractérisée en ce que** la première conduite (2) et la deuxième conduite (3) sont fixées conjointement avec la gaine (4) dans le boîtier d'accouplement (5), la gaine (4) étant retenue en particulier au moins par complémentarité de forme dans le boîtier d'accouplement (5).

4. Ligne de conduites (1) selon l'une des revendications 1 à 3,
**caractérisée en ce que** la première conduite (2) et/ou la deuxième conduite (3) sont réalisées respectivement sous forme de tubes et sont fabriquées de préférence à partir d'une matière thermoplastique, telle que du polyamide, en particulier à partir de PA 12.

5. Ligne de conduites (1) selon l'une des revendications 1 à 3,
**caractérisée en ce que** la première conduite (2) et/ou la deuxième conduite (3) sont réalisées respectivement sous forme de tuyaux flexibles et sont fabriquées de préférence à partir d'une matière élastomère, telle qu'un élastomère thermoplastique, éventuellement doté d'un insert de renforcement.

6. Ligne de conduites (1) selon la revendication 4,
**caractérisée en ce que** le tube est réalisé sous forme de tube ondulé.

7. Ligne de conduites (1) selon l'une des revendications 1 à 6,
**caractérisée en ce que** le boîtier d'accouplement (5) comprend un côté d'entrée (E) et un côté de sortie (A) opposé axialement au côté d'entrée (E) et doté d'ouvertures de sortie séparées (02, 03) pour les deux conduites (2, 3).

8. Ligne de conduites (1) selon la revendication 7,
**caractérisée en ce que** le boîtier d'accouplement (5) comprend, sur le côté d'entrée (E), une ouverture d'entrée commune (O1) pour les deux conduites (2, 3) entourées en particulier par la gaine (4).

9. Ligne de conduites (1) selon la revendication 7,
**caractérisée en ce que** les ouvertures de sortie (02, 03) se situent dans deux plans de boîtier décalés l'un par rapport à l'autre.

10. Ligne de conduites (1) selon l'une des revendications 1 à 9,
**caractérisée en ce que** la gaine (4) se termine dans une région d'extrémité d'entrée (EB), se raccordant à l'ouverture d'entrée (O1), du boîtier d'accouplement (5), laquelle région d'extrémité forme un logement de gaine, de telle sorte que les deux conduites (2, 3) s'étendent respectivement séparément à travers le reste du boîtier (5), en particulier à travers un espace de logement commun (AR1) pour les deux conduites (2, 3), les deux conduites (2, 3) étant directement adjacentes l'une à l'autre de préférence au moins dans certaines régions.

11. Ligne de conduites (1) selon l'une des revendications 1 à 10,
**caractérisée en ce que** le boîtier d'accouplement (5) est fabriqué à partir d'une matière thermoplastique, telle que du polyamide, en particulier à partir de la matière PA 6 ou PA 66.

12. Ligne de conduites (1) selon l'une des revendications 1 à 11,
**caractérisée en ce que** le boîtier d'accouplement (5) est formé à partir d'au moins deux coques de boîtier (5a, 5b) assemblées l'une à l'autre, les coques de boîtier (5a, 5b) étant réalisées sous forme de demi-coques de forme symétrique de préférence par rapport à un plan médian passant par l'axe longitudinal (X-X) du boîtier (5).

13. Ligne de conduites (1) selon la revendication 12,
**caractérisée en ce que** les coques de boîtier (5a, 5b) comprennent des éléments d'encliquetage (9a, 9b) réalisés de manière complémentaire les uns aux autres, au moyen desquels les coques de boîtier (5a, 5b) peuvent être encliquetées l'une à l'autre.

14. Ligne de conduites (1) selon l'une des revendications 1 à 13,
**caractérisée en ce que** la première conduite (2) et la deuxième conduite (3) sont guidées à travers le boîtier d'accouplement (5) respectivement de manière rectiligne (2a, 3a) ou de manière arquée (3b) au moins dans certaines zones.

15. Ligne de conduites (1) selon l'une des revendications 1 à 14,
**caractérisée en ce qu'**un connecteur (6, 7), tel qu'une partie enfichable ou une partie de manchon, est fixé respectivement à l'extrémité de la première conduite (2) et/ou à l'extrémité de la deuxième conduite (3) dans le boîtier d'accouplement (5) dans une région d'extrémité de sortie (AB) ou à l'extérieur du boîtier d'accouplement (5).

16. Ligne de conduites (1) selon l'une des revendications 1 à 15,
**caractérisée en ce qu'**une partie enfichable se trouve à l'extrémité de la première conduite (2) et une partie de manchon se trouve à l'extrémité de la deuxième conduite (3) ou une partie de manchon se trouve à l'extrémité de la première conduite (2) et une partie enfichable comme connecteur (6, 7) se trouve à l'extrémité de la deuxième conduite (3), respectivement.

17. Ligne de conduites (1) selon l'une des revendications 1 à 16,
**caractérisée en ce qu'**un espace de logement (AR2, AR3) pour un connecteur (6, 7), réalisé dans le boîtier d'accouplement (5) et se trouvant dans une région d'extrémité de sortie (AB1) du boîtier d'accouplement (5), en particulier un espace de logement (AR2) pour un connecteur (6) se trouvant sur la deuxième conduite (3) pour le guidage de l'agent de thermorégulation présente un surdimensionnement par rapport au connecteur (6, 7), de sorte que celui-ci se situe dans l'espace de réception (AR2, AR3) avec jeu.

18. Ligne de conduites (1) selon l'une des revendications 1 à 17,
**caractérisée en ce que** des éléments de support (12a, 12b) de guidage de forme et/ou de façonnage sont disposés, en particulier formés, dans le boîtier d'accouplement (5), tels que des nervures périphériques, des ergots de support ponctuels et/ou en particulier des éléments de retenue (12a, 12b) en forme de crochets complémentaires les uns aux autres dans les parties d'accouplement (5a, 5b) et venant en prise au moins partiellement autour de la périphérie respective des conduites (2, 3).
